# EUROPEAN PATENT APPLICATION

(11) **EP 2 071 878 A1**
(43) Date of publication of application: **17.06.2009**
(21) Application number: 07254863.9
(22) Date of filing: 13.12.2007
(51) Int. Cl.: H04W 4/00

(54) **A user terminal for connection to a picocell base station as well as a method of radio connection of a user terminal**

(71) Applicant: LUCENT TECHNOLOGIES INC., Murray Hill NJ 07974-0636 (US)
(72) Inventor: Holger, Claussen, Swindon SN5 3NJ Wiltshire (GB); Ho, Lester Tse Wee, Swindown SN5 5GD Wiltshire (GB)
(74) Representative: Sarup, David Alexander

(57) **Abstract**

A method is provided of radio connection of a user terminal to a picocell base station for radio communication. The method comprises the user terminal receiving from the picocell base station a pilot signal that includes a unique identifier of the picocell base station. The user terminal comprises a memory in which is stored a list of unique identifiers of picocell base stations to which connection of the user terminal is authorised, and a processor. The processor compares the received unique identifier to the list. The user terminal finds a match between the received unique identifier and one of the identifiers on its list and so sends a message authorising radio connection between the picocell base station and the user terminal.

## Description

### Field of the Invention

The present invention relates to telecommunications, in particular to wireless telecommunications.

### Description of the Related Art

Wireless telecommunications systems are well-known. Many such systems are cellular, in that radio coverage is provided by a bundle of radio coverage areas known as cells. A base station that provides radio coverage is located in each cell. Traditional base stations provide coverage in relatively large geographic areas and the corresponding cells are often referred to as macrocells.

It is possible to establish smaller sized cells within a macrocell. Cells that are smaller than macrocells are sometimes referred to as microcells, picocells, or femtocells, but we use the term picocells generically for cells that are smaller than macrocells. One way to establish a picocell is to provide a picocell base station that operates within a relatively limited range within the coverage area of a macrocell. One example of use of a picocell base station is to provide wireless communication coverage within a building.

The picocell base station is of a relatively low transmit power and hence each picocell is small compared to a macrocell.

Picocell base stations can use broadband Internet Protocol connections as "backhaul", in other words they are connected via picocell base station gateways to a Universal Mobile Telecommunications System (UMTS) core network, specifically each gateway is connected to a UMTS Mobile Switching Centre (MSC) and hence a Signalling Gateway Support Node (SGSN).

Picocell base stations are intended primarily for users belonging to a particular home or office. Picocell base stations may be private access or public access. In private access picocell base stations, access is restricted only to registered users, for example family members or particular groups of employees. In public access picocell base stations, other users may also use the picocell base station, subject to certain restrictions to protect the Quality of Service received by registered users.

There can be a large number of picocells within an area roughly equivalent to the size of a macrocell. Accordingly, there can be a large number of picocells in an operator's coverage area, such that conventional cell planning, as done to optimise location of base stations in macrocell networks, becomes impractical. This is particularly so as picocells are usually deployed by end-users or unskilled individuals installing picocell base stations where they choose in their offices and homes, for example in what is sometimes called a "plug-and-play" manner.

Where picocells are deployed, there is an increase in the number of cells that a mobile user terminal detects and interacts with. For example, a macrocell user moving along a road may often move in and out of range of picocell base stations, causing a sequence of handover attempt processes to and from the picocells. This can be to the detriment of data handling performance of the picocells. As the number of picocell base stations increases within a network, more network resources are required to handle handovers to or from picocell base stations. This gives rise to a practical limit on the number of picocell base stations that can be deployed within a macrocell area.

Handover attempts are one type of mobility procedure, and mobility procedures become more frequent in a network including picocells as compared to one with just macrocells. As such mobility procedures were designed for macrocell networks, telecommunications standards can require that multiple network elements are involved, for example, such as MSCs and SGSNs in UMTS core networks to which picocell base stations are connected. Although appropriate in macrocell networks, in a network including picocells the increasing number of such resource-intensive mobility procedures between multiple network elements is disadvantageous.

For example, in one possible approach, the picocell base station receives a location/routing area update request from a user terminal. The picocell base station replies with an identity request to the user terminal. The user terminal then sends its identifier which is information of the user in the form of an International Mobile Subscriber Identity (IMSI). The picocell base station then forwards the IMSI to a remote Signalling Gateway (BSG, BSR Signalling Gateway, where BSR denotes base station router (another name for a picocell base station)). The Signalling Gateway then checks the IMSI received against its list of registered IMSIs and rejects any requests from unregistered users.

In this approach, a user terminal often has to transmit its IMSI, which can give rise to security and privacy dangers. Also, both the picocell base station and the Signalling Gateway are involved in handling all location update requests from user terminals regardless of whether those requests are from registered users or not. This involves relatively large amounts of signalling.

When a user terminal is in an active call with a macrocell base station, the user terminal makes measurements of link quality over various Code Division Multiple Access (CDMA) channels and reports those measurements back to the base station. Each such CDMA channel has an associated scrambling code. Thus each user terminal has a list of scrambling codes in respect of which the user terminal makes measurements of link quality. Each CDMA channel and hence scrambling code is basically in respect of a different cell. Accordingly, based on these link quality measurements, the macrocell network decides whether and to which cell to initiate a handover. With the introduction of picocells, this approach becomes problematic. The macrocell network knows the scrambling code, i.e. CDMA channel, used by a picocell base station that is a candidate for handover. However, due to scrambling code reuse among picocells, this scrambling code does not uniquely identify which picocell the user terminal has measured.

### Summary of the Invention

The reader is referred to the appended independent claims. Some preferred features are laid out in the dependent claims.

An example of the present invention is a method of radio connection of a user terminal to a picocell base station for radio communication. In the method, the user terminal receives from the picocell base station a pilot signal that includes a unique identifier of the picocell base station. The user terminal comprises a memory which stores a list of unique identifiers of picocell base stations to which connection of the user terminal is authorised. The user terminal also comprises a processor. The processor compares the received unique identifier to the list. The user terminal finds a match between the received unique identifier and one of the identifiers on its list and so sends a message authorising radio connection between the picocell base station and the user terminal.

In preferred embodiments, the use of unique picocell identifiers in pilot signals, and a list of authorised picocells in the user terminal, has significant advantages. Decision-making regarding radio connection to a picocell base station, such as regarding a handover, may be made in a simple manner in the user terminal. Accordingly, much less signalling may be required than in known approaches of handling such procedures, giving rise to advantages in security and efficient usage of network resources.

### Brief Description of the Drawings

An embodiment of the present invention will now be described by way of example and with reference to the drawings, in which:
Figure 1 is a diagram illustrating a wireless communications network according to a first embodiment of the invention,
Figure 2 is a diagram illustrating the picocell associated with a picocell base station unit shown in Figure 1,
Figure 3 is a diagram illustrating the picocell base station unit,
Figure 4 is a diagram illustrating the user terminal,
Figure 5 is a flowchart illustrating a mobility procedure for a user terminal in idle mode (not handling a call), and
Figure 6 is a flowchart illustrating a mobility procedure for a user terminal in active mode (i.e. in active call-connection).

### Detailed Description

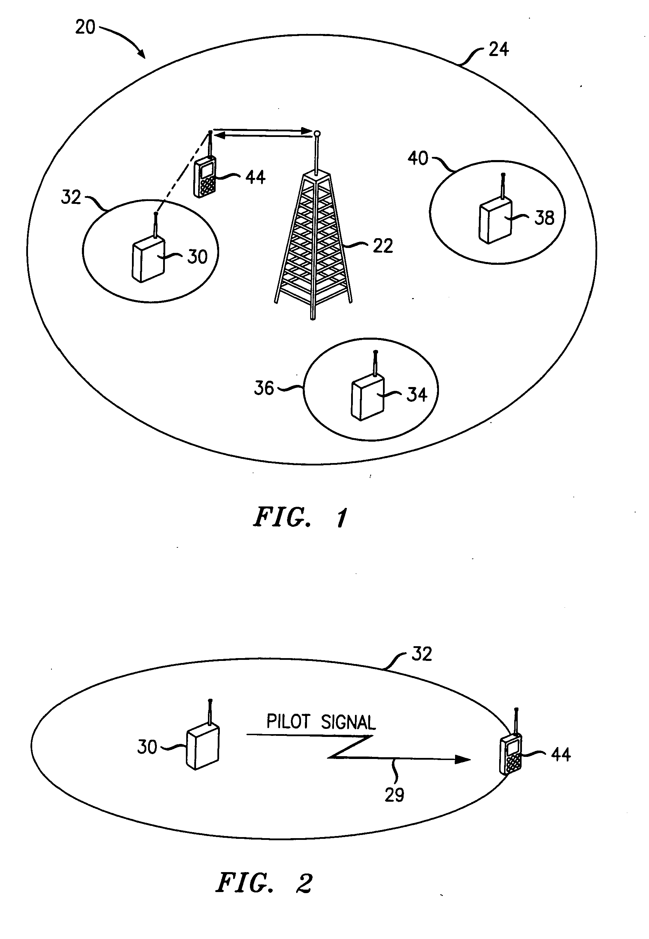

As shown in Figure 1, in a communication system 20, there is a base station 22 for wireless telecommunications. The base station has a radio coverage area 24 that is often referred to as a macrocell. The geographic extent of the macrocell 24 depends on the capabilities of the base station 22 and the surrounding geography.

Within the macrocell 24, a picocell base station unit (PCBSU) 30 provides wireless communications within a picocell 32. A picocell is a radio coverage area. The radio coverage area of the picocell 30 is much less than that of the macrocell 24. For example, the picocell 32 corresponds in size to a user's home.

Another picocell base station unit (PCBSU) 34 provides wireless coverage within a picocell 36. A further picocell 38 provides wireless coverage within a picocell 40.

It is possible for a mobile terminal 44 within the macrocell 24 to communicate with the macrocell base station 22 in known manner. When the mobile terminal 44 enters into a picocell 32 for which the mobile terminal is registered for communications within the picocell base station 30, it is desirable to handover the connection with the mobile terminal from the macrocell to the picocell. In the example shown in Figure 1, the user of mobile terminal 44 is a preferred user to use the picocell 32.

As shown in Figure 2, the picocell base station unit 30 transmits pilot signals 29 in the picocell 32.

### Picocell base station unit (PCBSU)

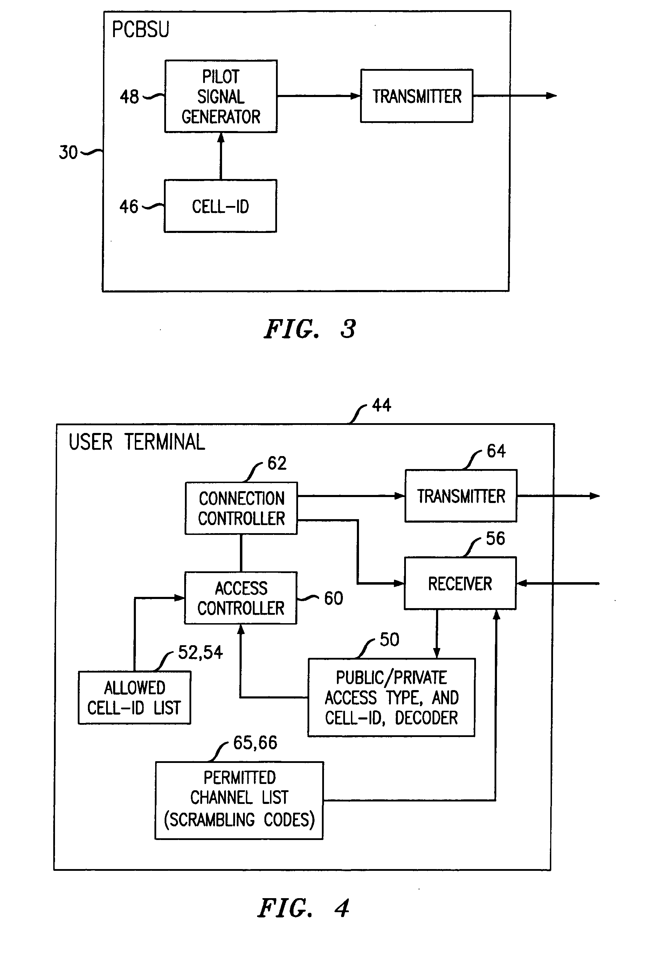

As shown in Figure 3, the picocell base station unit includes a picocell-identifier (Cell-ID) stage 46, a pilot signal generator 48 and a transmitter 50. The picocell identifier stage 48 is operative to supply a picocell identifier (Cell-ID) to a pilot signal generator 48. Each picocell base station unit has its own unique Cell-ID. The pilot signal generator 48 incorporates the picocell identifier in pilot signals that are transmitted via the transmitter 50. Information as to whether the picocell base station unit is private access or public access is also included in the pilot signals. In this example, a specific status flag is included for this purpose.

In some otherwise similar embodiments, the information regarding public/private is conveyed implicitly, e.g. specific Cell-ID ranges are reserved for public access picocell base station units.

### User terminal

Importantly, the user terminal includes a list 54 of Cell-IDs of picocell base station units (PCBSUs) that that user terminal is registered with, so is allowed to connect to.

As shown in Figure 4, the user terminal 44 includes a memory 52 which holds the list 54. The list is held in a memory 52 that is persistent and secure, for example the Subscriber Identity Module (SIM) of the user terminal 44. The list is modifiable by the network operator.

The user terminal 44 includes a receiver 56 connected to a decoder 58 of Cell-ID and public access/private access identifier connected to an access controller 60. The memory 52 holding the list 54 is also connected to the access controller 60. The access controller 60 is connected to a connection controller 62 connected to the receiver 56 and a transmitter 64 of the user terminal 44. A store 65 of a permitted channel list 66 (the use of which will be explained below) is also connected to the receiver 56.

In use the Cell-ID and public/private access type are decoded in the decoder 58 from a received pilot signal received via the receiver 56. This information is passed to the access controller 60 for processing in relation to the list 54 of allowed Cell-IDs, so as to assist in mobility procedures as explained in more detail below.

### Mobility Procedures

Some example mobility procedures will now be described. The first relates to when the user terminal is in idle mode, that is, connected to a cell but not in active call-connection. The second relates to when the user is in active mode that is, in a call-connection.

### Idle mode mobility procedure

Mobility procedures when the user terminal is in idle mode, involve making a new connection with a picocell base station unit. For example, they can relate to handovers from macrocell to picocell or picocell to picocell.

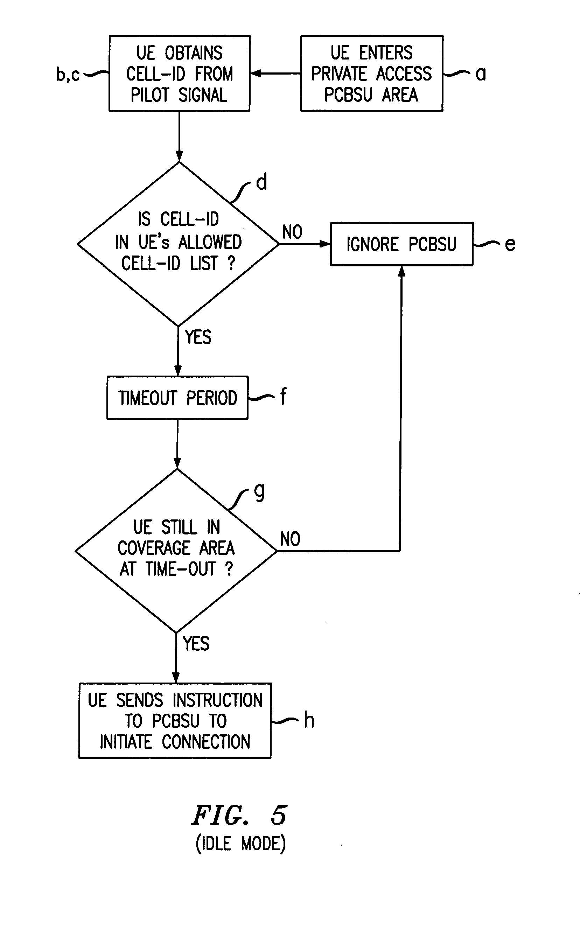

As shown in Figure 5, the user terminal User Equipment, "UE") 44 enters (step a) a private access picocell. The user terminal 44 receives (step b) the pilot signal sent periodically by the picocell base station unit (PCBSU) 30, and decodes (step c) that pilot signal to obtain the Cell-ID of the PCBSU.

A query is made (step d) in the access controller 60 as to whether the Cell-ID is on the user terminal's allowed Cell-ID list 52. If No, the picocell base station unit (PCBSU) is ignored (step e). If Yes, then a time-out period is executed (step f) by the access controller 6o that includes an internal clock (not shown). A query is then made (step g), involving the receiver 56, decoder 56, and access controller 60, as to whether or not the user terminal is still within the picocell at the end of the timeout period. If No, the PCBSU is ignored (step e). If Yes, the user terminal sends (step h) an instruction to the PCBSU 30 to initiate connection to that PCBSU. More specifically, the access controller 60 instructs the connection controller 62 to send a request to initiate connection with the PCBSU.

Examples of such connection initiation procedures, to use Universal Mobile Telecommunications System (UMTS) terminology, are location/routing area update and General Packet Radio System (GPRS) Attach.

### Active mode mobility procedure

Mobility procedures when the user terminal is in active mode, are to make a new connection with a picocell base station unit. They can relate to handovers from macrocell to picocell, or picocell to picocell. The example below is from macrocell to picocell.

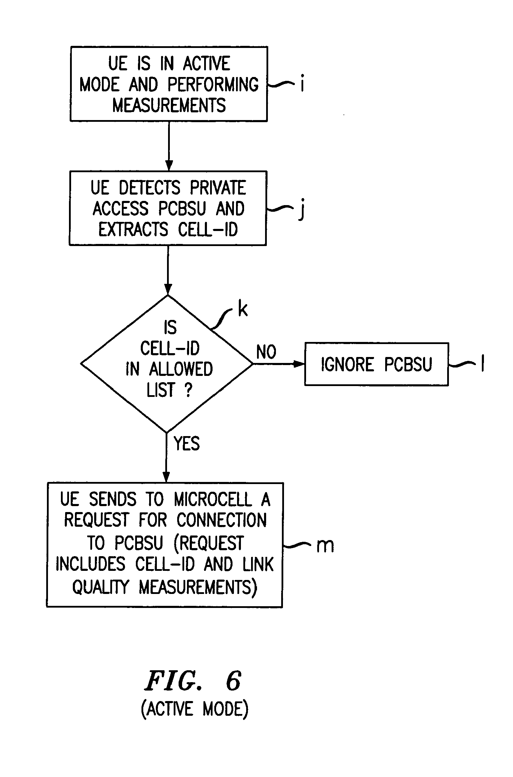

As shown in Figure 6, the user terminal in active mode connection to another cell, periodically performs (step i) and reports measurements of link quality in relation to other cells using its permitted channel list 66.

The various cells that the user terminal periodically measures quality of radio connections to, are effectively defined in the permitted channel list 66. The permitted list 66 is a list of scrambling codes, as each CDMA channel to a corresponding cell has an associated scrambling code. The list includes the scrambling codes for cells that all user terminals in a macrocell coverage area are to measure. Additionally, the list includes scrambling codes corresponds to the particular picocell base station units on the user terminal's allowed Cell-ID list. Accordingly, this permitted channel list 66 can be considered a user terminal-specific set of channels to measure link quality in respect of.

The user terminal moves into the coverage area of the picocell base station unit (PCBSU) 30 and so starts to receive and detect (step j) a pilot signal from the PCBSU 30, which in this example is a private access PCBSU. The Cell-ID is decoded from the received pilot signal in decoder 58.

A query is made (step k) in the access controller 60 as to whether the Cell-ID is on the user terminal's allowed Cell-ID list 52. If No, the PCBSU is ignored (step *l*). If Yes, in other words the user terminal has determined that it is allowed to connect to the PCBSU 30, then the user terminal 44 sends (step m) a request direct to the macrocell base station requesting that handover to the PCBSU 30 be initiated. The request is formulated by the connection controller 62 in response to appropriate instruction from the access controller 60 and transmitted via transmitter 64 of the user terminal 44. The request includes the unique identity (Cell-ID) of the PCBSU 30 so as to enable the handover to happen without additional queries being required by the macrocell base station so as to identify the correct PCBSU. The request also includes the link quality measurement information gathered by the user terminal in respect of the picocell base station unit. The link quality information is used by the macrocell base station to determine whether handover is permitted. Only if the link quality is above a predetermined threshold is handover to that PCBSU 30 permitted by the macrocell base station.

User terminals in active mode are usually subject to network-initiated, as opposed to user-terminal-initiated, handovers. In other words, the network has control, as compared to the user terminal, as to whether the handover authorised by the user terminal will be put into effect. In practise, the request from the user terminal for handover to that PCBSU which includes a unique identifier of that PCBSU together with information showing appropriate link quality, is often accepted.

### General

The example embodiments have involved terminology and descriptions known in a Universal Mobile Telecommunications System (UMTS) context. Other examples relate to other telecommunications standards, and picocell base station implementations. Such telecommunications standards include such as Third Generation Long Term Evolution (3GLTE), WiMAX, Global System for Mobiles, and Code Division Multiple Access (CDMA).

The present invention may be embodied in other specific forms without departing from its essential characteristics. The described embodiments are to be considered in all respects only as illustrative and not restrictive. The scope of the invention is, therefore, indicated by the appended claims rather than by the foregoing description. All changes that come within the meaning and range of equivalency of the claims are to be embraced within their scope.

## Claims

1. A method of radio connection of a user terminal to a picocell base station for radio communication, the method comprising:
the user terminal receiving from the picocell base station a pilot signal that includes a unique identifier of the picocell base station;
the user terminal comprising a memory in which is stored a list of unique identifiers of picocell base stations to which connection of the user terminal is authorised, and the user terminal comprising a processor, the processor comparing the received unique identifier to the list; and
the user terminal finding a match between the received unique identifier and one of the identifiers on its list and so sending a message authorising radio connection between the picocell base station and the user terminal.

2. A method according to claim 1, in which the user terminal receives an indication in the pilot signal that the picocell base station is authorised only for a predetermined set of user terminals.

3. A method according to claim 1 or claim 2, in which the user terminal measures link quality of radio signals from the picocell base station, and said message authorising radio connection includes information of said link quality.

4. A method according to claim 3, in which the user terminal measures link quality from cells according to a permitted channel list, the list being of permitted channels, each channel corresponding to a cell whereby at least some of said channels corresponding to picocells authorised for use by the user terminal;
said message authorising connection to the picocell base station identified in the received pilot signal including link quality information in respect of the picocell base station identified in the received pilot signal.

5. A method according to claim 3 or claim 4, in which a first base station to which the user terminal is connected receives said message authorising radio connection to the picocell base station which includes the link quality information in respect of the picocell base station; and said first base station permits said radio connection to the picocell base station dependent upon said link quality information being above a predetermined level.

6. A method according to claim 5, in which said first base station is a macrocell base station.

7. A method according to any preceding claim in which said message authorising connection is only sent upon the user terminal being determined as still being in the picocell after a predetermined period.

8. A user terminal for wireless telecommunications, the terminal comprising:
a receiver operative to receive a pilot signal;
a decoder operated to decode the received pilot signal to determine an identifier of a picocell base station;
a memory operative to store a list of identifiers of picocell base stations to which connection of the user terminal is authorised;
a processor operative to compare the received decoded identifier to the identifiers on the list;
a controller operative to generate a control signal in response to a match being determined between the received identifier and one of the identifiers on the list; and
a transmitter operative to transmit by radio a message authorising connection to the picocell base station identified in the received pilot signal in response to said control signal.

9. A user terminal according to claim 8, also comprising a list of permitted channels, each channel corresponding to a cell whereby at least some of said channels corresponding to picocells authorised for use by the user terminal, the user terminal being operative to periodically measure link quality from cells according to the permitted channel list;
said message authorising connection to the picocell base station identified in the received pilot signal including link quality information in respect of the picocell base station identified in the received pilot signal.

10. A user terminal according to claim 8 or claim 9, in which the user terminal is in active call-connection mode.
